# DEMANDE DE BREVET EUROPEEN

(11) **EP 0 815 724 A1**
(43) Date de publication de la demande: **07.01.1998**
(21) Numéro de dépôt: 97401475.5
(22) Date de dépôt: 25.06.1997
(51) Int. Cl.: A01K 1/06

(54) **Cornadis anti-pendaison**

(30) Priorité: 26.06.1996 FR 9607936
(71) Demandeur: AGRITUBEL S.A., 86200 Loudun (FR)
(72) Inventeur: Fornes, José Maria, 86200 Loudun (FR)
(74) Mandataire: Derambure, Christian

(57) **Abrégé**

Cornadis du type comportant au moins un élément de structure tubulaire (2) comprenant deux longerons (3a, 3b) sensiblement parallèles ; au moins deux traverses (4a, 4b) sensiblement perpendiculaires aux longerons (3a, 3b) ; une barre coudée (5), fixée rigidement aux deux (3a, 3b) longerons, entre les deux traverses (4a, 4b) ; une barre de commande (13), mobile en rotation, s'étendant à proximité d'un des longerons (3a) et comportant une saillie (19) formée d'une rampe (19a) et d'un bord de blocage. Une barre mobile (10) est montée pivotante sur la barre coudée (5) ; et comporte à une extrémité (10a) une chape de blocage (11) disposée à cheval sur ledit longeron (3a) et la barre de commande (13). Un tourillon transversal (15) est reçu par la chape de blocage (11) et guidé en translation suivant une direction (D3) sensiblement perpendiculaire à la barre de commande (13) et destiné à reposer sur la barre de commande (19a).

## Description

L'invention concerne un cornadis du type comportant au moins un élément de structure tubulaire s'étendant dans un plan principal.

Chaque élément de structure comprend deux longerons sensiblement parallèles et au moins deux traverses sensiblement perpendiculaires aux longerons et les reliant entre eux de manière rigide.

Une barre coudée est fixée rigidement aux deux longerons, entre les deux traverses.

Une barre de commande, mobile en rotation, s'étend sensiblement parallèlement de manière écartée mais à proximité d'un des longerons, et comporte une saillie formée d'une rampe et d'un bord de blocage, terminant la rampe, sensiblement perpendiculaire à la barre de commande.

Une barre mobile sensiblement rectiligne est montée pivotante sur la barre coudée, avec son axe de pivotement sensiblement perpendiculaire au plan principal.

Enfin, une chape de blocage est fixée rigidement à une extrémité de la barre mobile. Cette chape de blocage est disposée à cheval sur ledit longeron et la barre de commande, et reçoit un tourillon transversal. Ce dernier est guidé en translation suivant une direction sensiblement perpendiculaire à la barre de commande et est destiné à reposer sur la barre de commande et à être sollicité, du fait de son propre poids, par la rampe de la saillie lorsque le cornadis est en position de fonctionnement, la barre de commande ayant une position angulaire permettant cette sollicitation.

Dans certains cornadis de l'art antérieur, la barre coudée est formée d'un premier tronçon rectiligne, proche et parallèle à l'une des traverses et d'un deuxième tronçon rectiligne, parallèle au premier, et décalé, dans le plan principal, par rapport au premier tronçon vers l'autre traverse.

Ces deux tronçons sont reliés l'un à l'autre par un troisième tronçon incliné.

Ainsi, la barre mobile peut se trouver dans deux positions : une position de fermeture, où elle est sensiblement parallèle aux deux traverses et une position d'ouverture, où elle est inclinée par rapport aux traverses et sensiblement parallèle au troisième tronçon incliné.

La position de fermeture ne permet pas le passage de la tête d'une bête, tandis que la position d'ouverture permet le passage de la bête.

Un tel cornadis présente cependant des inconvénients.

En effet, lorsque la barre mobile est en position d'ouverture, il arrive que la bête tombe et que sa tête se retrouve coinçée entre la traverse et la barre mobile, qui a tendance à se placer en position de fermeture contre le deuxième tronçon.

Il est alors difficile de dégager la bête qui risque de se blesser, voire de se pendre.

Certains constructeurs ont tenté de pallier ce risque de pendaison en proposant un cornadis du type précité, dont la barre coudée présente une forme sensiblement triangulaire. Le sommet correspond à l'axe de pivotement de la barre mobile, de sorte que la barre mobile peut être disposée suivant trois positions : une position dite de fermeture, où elle est sensiblement parallèle aux deux traverses ; une position dite d'ouverture et une position dite de dégagement, où elle est inclinée par rapport aux traverses en étant rapprochée de l'un ou l'autre des segments de la barre coudée formant le triangle. En position dite d'ouverture, la chape de blocage est rapprochée de la barre coudée.

De tels cornadis sont notamment décrits dans les documents US-4 185 592, DE-U-29 516 477 et NL-A-90 00 107.

Ces cornadis présentent cependant l'inconvénient d'être compliqués à utiliser et de nécessiter un grand nombre de pièces de forme et d'assemblage complexes.

De plus, plus le nombre de pièces en mouvement est important et plus le risque d'usure est grand.

Par ailleurs, le blocage des barres mobiles et des barres de commande de ces cornadis n'est pas toujours possible ou, s'il l'est, il n'est toujours pas sécurisé.

L'invention a donc pour but de pallier les inconvénients de l'art antérieur.

A cet effet, elle propose un cornadis du type précité, caractérisé en ce que, en combinaison,
la barre de commande comporte des moyens, dont la saillie et au moins une deuxième saillie, pour permettre à ladite barre de commande de se trouver dans trois positions angulaires distinctes, de sorte que pour chacune de ces positions angulaires, la barre mobile puisse respectivement :
- être bloquée en position de fermeture ;
- passer librement dans chacune des trois positions ; ou
- passer librement de la position de fermeture à la position d'ouverture ;
   et le tourillon transversal est guidé en translation suivant une direction sensiblement perpendiculaire à la barre de commande et destiné à reposer sur la barre de commande et à être sollicité, du fait de son propre poids, notamment par la rampe de la saillie, respectivement ladite deuxième saillie, lorsque le cornadis est en position de fonctionnement, la barre de commande ayant une position angulaire respective permettant cette sollicitation ; la deuxième saillie étant écartée de la saillie par un espace adapté à recevoir, avec un léger jeu, le tourillon transversal.

Pour éviter le passage de la bête entre la barre mobile et la barre coudée du côté opposé à la chape de blocage, notamment lorsque la barre mobile est en position d'ouverture, celle-ci comporte des moyens de condamnation s'étendant dans un plan décalé par rapport au plan principal.

Les moyens de condamnation de passage sont situés vers l'extrémité de la barre mobile, opposée à la chape de blocage, et/ou vers l'extrémité de la barre mobile, à laquelle est fixée la chape de blocage.

Ces moyens de condamnation se présentent sous la forme d'au moins un tube courbé, dont les deux extrémités sont fixées rigidement à la barre mobile.

Selon l'invention, la barre coudée comporte, d'un seul tenant, :
- deux tronçons tubulaires, sensiblement alignés et parallèles aux traverses,
- une portion tubulaire coudée, reliant les tronçons entre eux et comportant deux segments rectilignes inclinés l'un par rapport à l'autre et dont le point de convergence forme un coude, ce dernier étant dirigé vers la barre mobile et comportant des moyens de pivotement de la barre mobile,
   les extrémités libres des tronçons étant fixées rigidement au longeron correspondant.

D'une manière générale, le coude de la barre coudée est situé sensiblement dans la partie médiane de la barre coudée.

Dans le mode de réalisation représenté, le coude est situé vers la partie médiane de la barre coudée, dans la partie opposée à la barre de commande.

Dans un mode de réalisation, le cornadis comporte en outre une tige s'étendant sensiblement parallèlement à la traverse, entre la traverse et la barre coudée, et fixée au moins à l'une de ses extrémités, à la barre coudée, de manière à interdire le passage de la tête d'un animal entre la traverse et la barre coudée.

Les moyens de pivotement de la barre mobile comprennent une chape fixée rigidement à la barre coudée, à l'endroit du coude, et disposée dans le plan principal, la chape recevant la barre mobile et un tourillon la traversant et formant son axe de pivotement.

Suivant un mode de réalisation, la chape de blocage s'étend sensiblement dans la même direction et le même plan que la barre mobile.

Elle comporte deux rainures rectilignes en regard s'étendant dans la même direction que la barre mobile, et dans lesquelles le tourillon transversal est guidé.

La barre de commande est tubulaire et sensiblement rectiligne.

Dans un mode de réalisation, elle peut comporter des moyens de verrouillage de la barre mobile en position de fermeture.

Par exemple, les moyens de verrouillage comportent :
- deux tubes ou anneaux, d'axe géométrique sensiblement perpendiculaire au plan principal, fixés sur le longeron et destinés à être disposés de part et d'autre de la chape de blocage lorsque la barre mobile est sensiblement parallèle aux traverses ; et
- une pièce formant agrafe destinée à venir à cheval sur la chape de blocage et à être engagée dans les deux tubes ou anneaux.

Selon l'invention, la barre de commande comporte une paire de saillies alignées, de forme sensiblement identique à celle de la saillie, avec leur bord de blocage en regard et écartés l'un de l'autre par un espace adapté à recevoir le tourillon transversal pour le bloquer.

La paire de saillies est diamétralement opposée à la saillie et le bord de blocage d'une des saillies de la paire de saillies est aligné avec le bord de blocage de la saillie.

Le cornadis de l'invention comporte en outre :
- des moyens de support de la barre de commande aptes à permettre son blocage en translation longitudinale tout en autorisant sa rotation ;
- des moyens de maintien de la barre de commande en position écartée du longeron adjacent ;
- des moyens de commande en rotation de la barre de commande ;
- des organes de fin de course en rotation de la barre de commande ; et
- des moyens de verrouillage en position de la barre de commande.

Les moyens de support comprennent au moins une pièce de support, fixée rigidement au longeron.

Cette pièce de support comporte une partie annulaire dont l'axe géométrique est sensiblement parallèle au longeron et présentant une ouverture dirigée vers le longeron, la partie annulaire étant destinée à recevoir avec jeu la barre de commande.

Deux parois prolongent chacune des extrémités de la partie annulaire adjacentes à l'ouverture. Ces parois sont fixées rigidement par leur extrémité libre au longeron, dans le plan principal.

Les parois sont inclinées par rapport à l'axe géométrique de la partie annulaire et divergent du côté opposé à l'ouverture.

Les moyens de support sont disposés au moins vers les extrémités de la barre de commande.

Les moyens de maintien comprennent une pièce sensiblement plane comportant, vers son centre, un orifice circulaire dont l'axe géométrique est sensiblement parallèle au longeron, l'une des extrémités de la pièce présentant une courbe à concavité tournée vers l'extérieur, de forme sensiblement complémentaire à celle du longeron. Ladite pièce est destinée à reposer, par son extrémité courbée, sur le longeron et à recevoir, par son orifice, la barre de commande.

Les moyens de maintien comportent en outre deux encoches sensiblement rectilignes, alignées, débouchant sur l'orifice et s'étendant sensiblement perpendiculairement à l'axe géométrique de l'orifice, et parallèlement aux traverses, lorsque les moyens de maintien sont en position sur le longeron, les encoches présentant une dimension telle qu'elles puissent recevoir avec jeu les saillies.

Le cornadis comporte en outre au moins deux manchons de diamètre intérieur sensiblement complémentaire au diamètre de la barre de commande.

Ces manchons sont destinés à être maintenus fixes sur la barre de commande par le serrage d'organes de fixation - notamment vis et écrou - traversant un trou du manchon et venant s'ancrer dans la barre de commande.

Selon l'invention, les manchons sont disposés aux extrémités de la barre de commande, à l'extérieur et proches des moyens de support, de manière à permettre le blocage en translation longitudinale de la barre de commande.

Les moyens de commande comprennent au moins une poignée, fixée rigidement vers une extrémité de la barre de commande, par exemple sur un des manchons. La manoeuvre de cette poignée permet la rotation de la barre de commande.

Les organes de fin de course comprennent deux ergots fixés rigidement à la barre de commande, à proximité d'au moins une pièce de support, et s'étendant sensiblement parallèlement à la barre de commande.

Les ergots sont espacés d'une distance sensiblement égale au diamètre de la barre de commande et leurs dimensions sont déterminées de sorte que, lors de la rotation de la barre de commande, un ergot vienne buter contre l'une des parois de la pièce de support, de manière à limiter la course en rotation de la barre de commande à un demi-tour.

Les moyens de verrouillage en position de la barre de commande comprennent un organe présentant sensiblement la forme d'un L. L'extrémité de la hampe est fixée de manière mobile en rotation à la barre de commande entre les deux ergots, la hampe du L présentant une longueur au moins égale à la distance séparant la barre de commande du longeron. La petite barre du L présente une forme courbe à concavité tournée vers l'extérieur, de manière à pouvoir épouser sensiblement la forme du longeron lorsqu'un des ergots est en butée.

Suivant un mode de réalisation, les organes de fin de course et les moyens de verrouillage en position sont montés de manière fixe sur au moins un des manchons.

Enfin, dans une réalisation possible de l'invention, les longerons comportent à au moins une de leurs extrémités respectivement un embout de fixation à un poteau ancré dans une surface, par exemple dans le sol, de manière que le cornadis soit écarté de ladite surface.

D'autres caractéristiques et avantages de l'invention sont maintenant décrits en référence aux dessins donnés à titre d'exemples non limitatifs.

La figure 1 représente une vue en perspective schématique d'un cornadis de l'invention.

La figure 2 est une vue en plan d'un élément de structure tubulaire du cornadis de la figure 1.

Les figures 3A, 3B, 3C sont des vues en coupe partielle de la chape de blocage, lorsque la barre mobile est respectivement bloquée en position de fermeture, libre d'aller de la position de fermeture à la position d'ouverture, libre de passer dans les trois positions.

La figure 4 est une vue en coupe selon la ligne IV-IV de la figure 1.

La figure 5 est une vue en coupe selon la ligne V-V de la figure 1.

La figure 6 représente une vue schématique en perspective partielle d'un détail du cornadis de l'invention.

La figure 7 est une vue partielle montrant un moyen de liaison d'un longeron du cornadis de l'invention à un poteau.

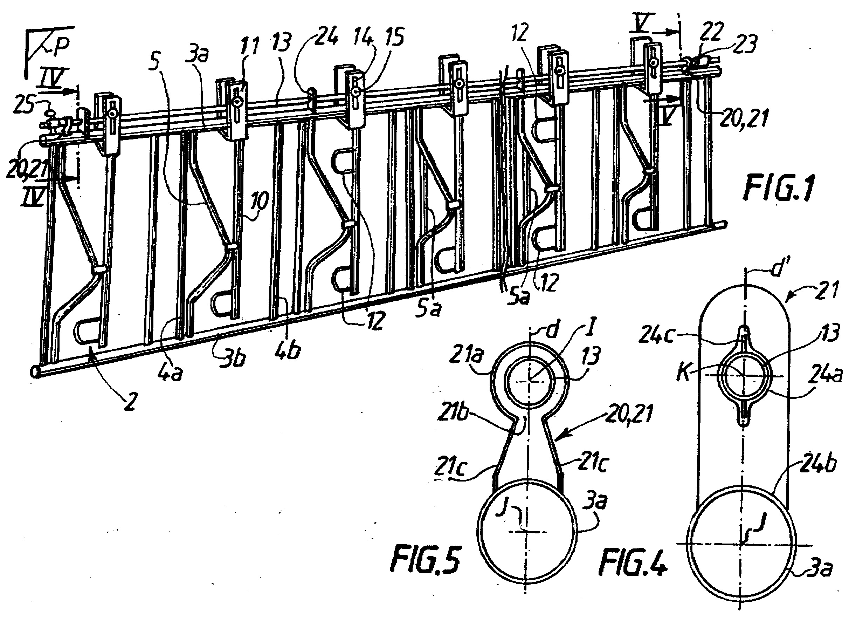

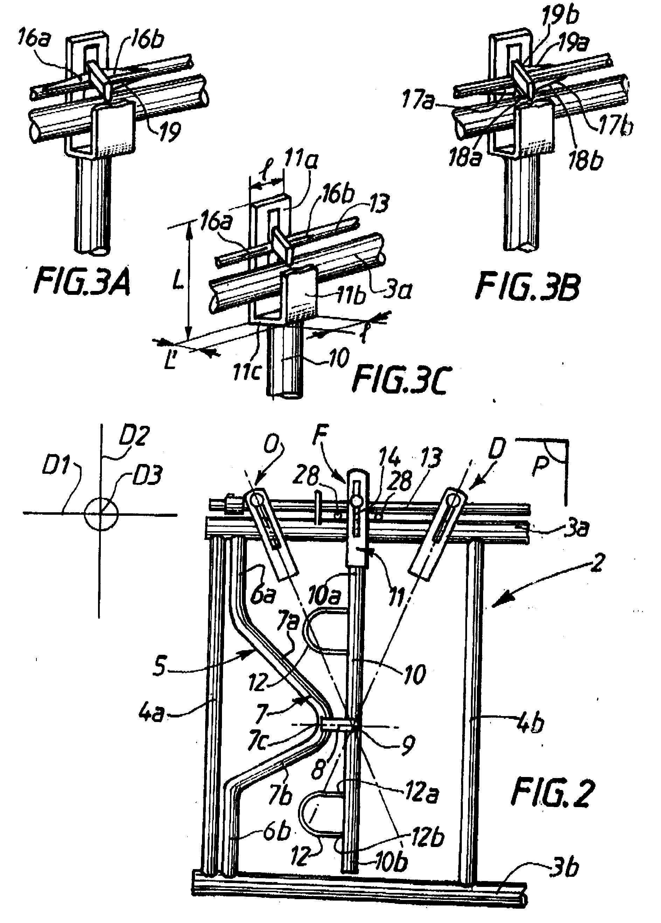

Comme représenté à la figure 1, le cornadis 1 de l'invention comporte plusieurs éléments de structure tubulaire 2, dont un est représenté en détail à la figure 2.

Le cornadis 1 s'étend généralement suivant un plan principal P.

En référence à la figure 2, un élément de structure 2 comprend deux longerons rectilignes tubulaires 3a, 3b, sensiblement parallèles entre eux s'étendant suivant une direction générale D1.

Les deux longerons 3a, 3b présentent, dans le mode de réalisation représenté, sensiblement une même section, sensiblement circulaire.

Les deux longerons 3a, 3b sont reliés rigidement l'un à l'autre par deux traverses tubulaires 4a, 4b qui leur sont perpendiculaires, et s'étendent suivant une direction D2.

Ainsi, les longerons 3a, 3b et traverses 4a, 4b définissent un espace en forme de parallèlogramme.

En position d'utilisation du cornadis, les traverses 4a, 4b sont disposées verticalement, tandis que les longerons 3a, 3b sont disposés horizontalement.

Dans le mode de réalisation représenté, le cornadis 1 comporte un unique longeron supérieur 3a et un unique longeron inférieur 3b reliés entre eux par les traverses 4a, 4b des différents éléments de structure 2.

On pourrait néanmoins prévoir d'assembler les uns aux autres des éléments de structure 2 indépendants au niveau des longerons 3a, 3b de chaque élément de structure 2.

Une barre coudée 5 est fixée rigidement aux deux longerons 3a, 3b entre les deux traverses 4a, 4b, en étant plus proche de l'une d'elles 4a.

La barre coudée 5 est tubulaire et monobloc.

Elle est formée, d'un seul tenant, de deux tronçons tubulaires 6a, 6b, sensiblement alignés et parallèles aux traverses 4a, 4b, et d'une portion tubulaire coudée 7, reliant les deux tronçons 6a, 6b entre eux.

La portion tubulaire coudée 7 comporte deux segments rectilignes 7a, 7b, inclinés l'un par rapport à l'autre d'un angle d'environ 90° et dont le point de convergence forme un coude 7c.

Les extrémités libres des tronçons 6a, 6b sont fixées rigidement respectivement au longeron supérieur 3a et au longeron inférieur 3b à proximité de la traverse 4a (située à gauche de la figure 2), le coude 7c étant dirigé vers la traverse 4b.

Dans la réalisation représentée, la barre coudée 5 est réalisée par torsion d'une barre rectiligne. Par conséquent, les liaisons entre les tronçons 6a, 6b et la portion coudée 7, et le coude 7c sont arrondis.

Le segment 7a, situé vers le longeron 3a, présente une longueur légèrement supérieure à celle du segment 7b, tandis que les tronçons 6a, 6b présentent une longueur sensiblement identique.

Dans le présent mode de réalisation, leur dimension est telle que le coude 7c est situé vers la partie médiane de la barre coudée 5, dans la partie inférieure de l'élément de structure 2, c'est-à-dire la partie comprenant le longeron inférieur 3b.

Il est entendu que le coude 7c pourrait également être situé sensiblement dans la partie médiane de la barre coudée ou bien, vers cette partie médiane dans la partie supérieure de cet élément de structure 2.

Suivant un autre mode de réalisation, on peut envisager que la barre coudée 5 comporte deux segments rectilignes, inclinés l'un par rapport à l'autre d'un angle d'environ 90° et reliés respectivement directement aux longerons 3a, 3b.

Pour interdire le passage d'une tête d'animal dans le triangle formé par les segments 7a, 7b et la traverse 4a, on peut prévoir de fixer rigidement aux segments 7a et 7b, et entre eux, une tige 5a s'étendant dans le même plan et sensiblement parallèlement à la traverse 4a (voir notamment la figure 1).

Sur le coude 7c, est fixée rigidement une chape 8, disposée dans le plan principal P, s'étendant sensiblement parallèlement aux longerons 3a, 3b et vers la traverse 4b.

Cette chape 8 comporte vers son extrémité libre deux trous en regard destinés à recevoir un tourillon 9 les traversant suivant une direction D3 sensiblement perpendiculaire au plan principal P.

L'élément de structure 2 comprend également une barre mobile 10 sensiblement rectiligne et tubulaire.

Cette barre mobile 10 présente une longueur légèrement inférieure à celle des traverses 4a, 4b et comporte à une extrémité 10a, une chape de blocage 11 qui lui est fixée rigidement.

La barre mobile 10 comprend vers sa partie médiane deux trous en regard, destinés à venir en regard des trous de la chape 8, pour recevoir le tourillon 9, formant l'axe de pivotement de la barre mobile 10.

Les trous de la barre mobile 10 sont disposés de sorte que l'extrémité 10b de la barre mobile 10 opposée à l'extrémité 10a comportant la chape de blocage 11, ne puisse pas être en contact avec le longeron 3b lors de son pivotement, tout en lui étant proche.

La barre mobile 10 comprend, en outre, entre l'extrémité 10b et la chape 8 des moyens 12 de condamnation de passage entre la barre mobile 10 et la barre coudée 5.

Ces moyens de condamnation 12 s'étendent dans un plan décalé, mais parallèle, par rapport au plan principal P.

Ils sont disposés entre l'extrémité libre 10b de la barre mobile 10 et son axe de pivotement matérialisé par le tourillon 9.

Ces moyens de condamnation 12 se présentent sous la forme d'un tube courbé, dont les deux extrémités 12a, 12b sont fixées rigidement à la barre mobile 10.

L'encombrement de ces moyens de condamnation 12 est tel qu'ils occupent sensiblement la moitié de l'espace séparant le tronçon 6b de la barre mobile 10, lorsque celle-ci est sensiblement parallèle aux traverses 4a, 4b.

On peut en outre prévoir, comme représenté à la figure 2, que la barre mobile 10 comporte également des moyens de condamnation 12, similaires, disposés entre l'extrémité 10a de la barre mobile 10 et son axe de pivotement, sensiblement en regard du tronçon 6a.

La chape de blocage 11 s'étend sensiblement dans la même direction que la barre mobile 10, et dans le plan principal P.

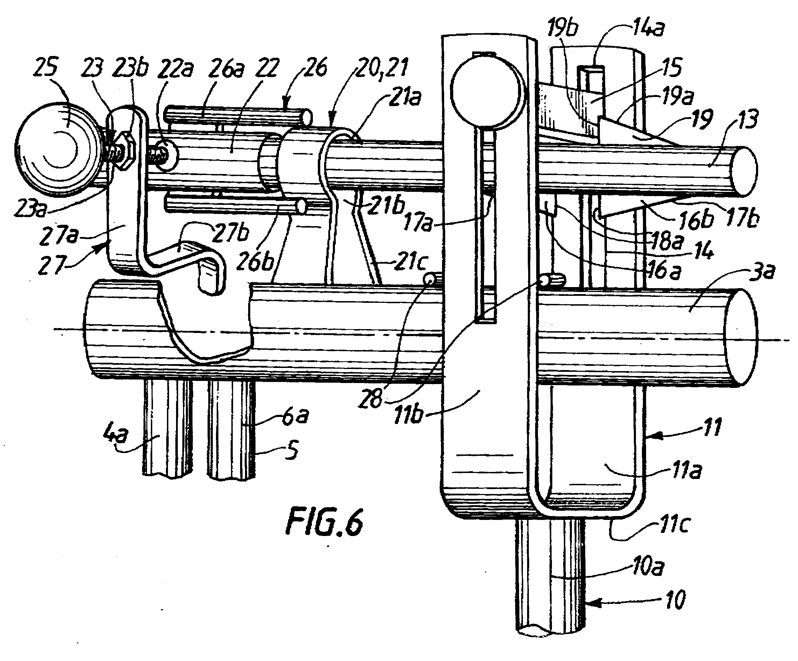

Elle comprend deux parois parallèles 11a, 11b, s'étendant suivant la direction de la barre mobile 10, et reliées entre elles par une paroi 11c, perpendiculaire et fixée rigidement à l'extrémité 10a de la barre mobile 10 (figures 3A à 3C et 6).

Les parois 11a et 11b présentent une longueur L - comptée suivant la direction longitudinale de la barre mobile 10- sensiblement identique.

En outre, les parois 11a, 11b et 11c présentent une même largeur l -comptée transversalement à la direction longitudinale de la barre mobile 10-.

Cette largeur l est sensiblement égale, ou légèrement supérieure au diamètre de la section transversale de la barre mobile 10.

Comme cela est visible à la figure 6, la chape de blocage 11 est disposée à cheval sur le longeron 3a et une barre de commande 13, s'étendant sensiblement parallèlement de manière écartée, mais à proximité, du longeron 3a.

La longueur L' de la paroi 11c -comptée suivant la direction D3 -, et donc l'écartement entre les parois 11a et 11b, doivent être suffisants pour recevoir avec jeu le longeron 3a et la barre de commande 13.

La barre de commande 13, qui sera détaillée plus loin, est sensiblement rectiligne et tubulaire. Elle présente, dans le mode de réalisation représenté, une section transversale sensiblement circulaire de diamètre inférieur à celui de la section transversale du longeron 3a, de l'ordre de la moitié, par exemple.

Les parois 11a et 11b de la chape de blocage 11 comportent chacune une rainure 14 rectiligne. Les rainures 14 des parois 11a, 11b sont disposées en regard et s'étendent suivant la direction longitudinale de la barre mobile 10.

Les rainures 14 dépassent la barre de commande 13, lorsque la barre mobile 10 est sensiblement parallèle aux traverses 4a et 4b.

Ces rainures 14 sont adaptées à recevoir et à guider un tourillon transversal 15 s'étendant suivant la direction D3.

Plus précisément, le tourillon 15 s'étend transversalement aux parois 11a, 11b, entre les deux rainures 14 et est bloqué en translation longitudinale entre ces rainures 14.

Il ne peut se déplacer et être guidé que le long des rainures 14 suivant la direction longitudinale de la barre mobile 10.

Le tourillon 15 est destiné à reposer sur la barre de commande 13 et à coopérer avec elle.

Comme représenté aux figures 3A à 3C et 6, la barre de commande 13 comporte une paire de saillies 16a, 16b.

Chaque saillie 16a, 16b est formée d'une rampe 17a, 17b et d'un bord de blocage 18a, 18b.

Elles sont sensiblement planes et présentent sensiblement une forme de triangle.

Les rampes 17a, 17b sont inclinées d'un angle d'environ 10° par rapport à la direction générale, D1, de la barre de commande 13 et sont terminées à leur sommet par le bord de blocage 18a, 18b qui est perpendiculaire à la barre de commande 13.

Les saillies 16a et 16b sont disposées de sorte que les bords 18a et 18b soient en regard et écartés l'un de l'autre par un espace adapté à recevoir avec un léger jeu le tourillon transversal 15.

La barre de commande 13 comporte également une saillie 19, de forme similaire à celle des saillies 16a et 16b, diamètralement opposée à la paire de saillies 16a, 16b.

La saillie 19 est disposée de sorte que sa rampe 19a soit en regard avec la rampe 17b de la saillie 16b et que son bord de blocage 19b soit aligné avec le bord de blocage 18b de la saillie 16b, suivant la direction D2, de sorte que la base de la rampe 19a soit dirigée vers la traverse 4b.

Le bord de blocage 19b de la saillie 19 et le bord 18a de la saillie 16a sont donc écartés -suivant la direction longitudinale D1 de la barre de commande 13- d'un espace adapté à recevoir avec un léger jeu le tourillon transversal 15, c'est-à-dire d'un espace de dimension légèrement supérieure à l'encombrement du tourillon transversal 15 sur la barre de commande 13.

Ainsi, suivant la position angulaire de la barre de commande 13, le tourillon transversal 15 peut être sollicité par l'une des saillies 16a, 16b pour être bloqué entre les bords de blocage 18a, 18b ou par la saillie 19 pour être bloqué contre le bord de blocage 19b.

La barre de commande 13 est supportée par des moyens de support 20 fixés rigidement au longeron 3a.

Comme représenté aux figures 5 et 6, ces moyens de support 20 comprennent au moins une pièce de support 21 comportant une partie annulaire 21a dont l'axe géométrique s'étend suivant la direction D1 et dans le plan principal P.

La partie annulaire 21a présente une ouverture 21b dirigée vers le longeron 3a et sensiblement symétrique par rapport à la droite d définie par les centres I, J de la partie annulaire 21a et du longeron 3a, et sensiblement perpendiculaire à la direction D1.

Deux parois 21c prolongent chacune des extrémités de la partie annulaire 21a adjacentes à l'ouverture 21b.

Ces parois 21c sont fixées rigidement par leurs extrémités libres au longeron 3a, par exemple par soudure.

Elles sont disposées symétriquement et inclinées par rapport à la droite d et divergent du côté opposé à l'ouverture 21b.

La distance séparant les extrémités libres des deux parois 21c est sensiblement égale au diamètre de la partie annulaire 21a.

La partie annulaire 21a est destinée à recevoir avec jeu la barre de commande 13, permettant ainsi sa rotation.

Le cornadis 1 comporte au moins deux pièces de support 21 disposées chacune vers une extrémité du longeron 3a.

La barre de commande 13 est bloquée en translation longitudinale au moyen d'au moins deux manchons 22 disposés à ses extrémités, à l'extérieur et proches des pièces de support 21. Ils présentent sensiblement une forme de tube cylindrique creux.

Ces manchons 22 présentent un diamètre intérieur sensiblement complémentaire au diamètre de la section transversale de la barre de commande 13.

Ils sont maintenus fixe sur la barre de commande 13 par le serrage d'organes de fixation 23 tels que par exemple une vis 23a et un écrou 23b. La vis 23a traverse un trou 22a du manchon 22 et vient s'ancrer dans la barre de commande 13.

La barre de commande 13 est maintenue écartée du longeron 3a sur toute sa longueur, grâce à des moyens de maintien 24.

Ces moyens de maintien 24 comprennent une pièce sensiblement plane s'étendant suivant la direction D2.

Cette pièce 24, représentée en détail à la figure 4, comporte, vers son centre, un orifice circulaire 24a dont l'axe géométrique est sensiblement parallèle à la direction D1, lorsque la pièce 24 est montée.

Le centre K de l'orifice circulaire 24a est aligné avec le centre J de la section transversale du longeron 3a suivant une droite d' sensiblement perpendiculaire au longeron 3a.

Une extrémité 24b de la pièce 24 est destinée à reposer sur le longeron 3a.

A cet effet, l'extrémité 24b présente une courbe à concavité tournée vers l'extérieur, de forme sensiblement complémentaire à celle du longeron 3b.

Deux encoches 24c sensiblement rectilignes débouchent sur l'orifice 24a et sont alignées sur la droite d'.

L'orifice circulaire 24a est destiné à recevoir la barre de commande 13.

Les encoches 24c présentent une dimension telle qu'elles puissent recevoir également les saillies 16a, 16b et 19.

La barre de commande 13 est actionnée en rotation au moyen d'une poignée 25 fixée rigidement sur le manchon 22. Plus précisément, la poignée est vissée sur la vis 23a.

On peut également prévoir de la fixer directement sur la barre de commande 13.

Le cornadis 1 comporte des organes 26 de fin de course en rotation de la barre de commande 13, visibles à la figure 6.

Ces organes 26 se présentent sous la forme de deux ergots 26a, 26b fixés rigidement, par exemple par soudure, à la barre de commande 13, et plus particulièrement à l'un des manchons 22, notamment celui comportant la poignée 25.

Les ergots 26a, 26b sont en forme de tige rectiligne et s'étendent suivant la direction D1, lorsque le cornadis 1 est monté.

Ils sont espacés d'une distance sensiblement égale au diamètre de la barre de commande 13.

Leur longueur -comptée suivant D1- est déterminée de sorte que, lors de la rotation de la barre de commande 13, un ergot 26a, 26b vienne buter contre une paroi 21c de la pièce de support 21 adjacente.

Ainsi, la course de la barre de commande 13 est limitée, à un demi-tour du fait de l'écartement des deux ergots.

Les deux ergots 26a, 26b s'étendent au-dessus de la face de la barre de commande 13 séparant la paire de saillies 16a, 16b de la saillie 19.

Le cornadis 1 comporte également des moyens 27 de verrouillage en position de la barre de commande 13.

Ces moyens de verrouillage 27 comprennent un organe sensiblement en forme de L, visible à la figure 6.

L'extrémité de la hampe 27a du L est fixée à la barre de commande 13 entre les deux ergots 26a, 26b. Elle est plus particulièrement fixée entre la poignée 25 et le manchon 22, de manière mobile autour de l'axe formé par la vis 23a.

La hampe 27a présente une longueur au moins égale à la distance séparant la barre de commande 13 du longeron 3a, de sorte que la petite barre 27b du L puisse reposer sur le longeron 3a, lorsqu'un ergot 26a, 26b est en butée.

La petite barre 27b est incurvée à concavité tournée vers l'extérieur du L, de manière à pouvoir épouser sensiblement la forme du longeron 3a.

La barre mobile 10 peut être disposée suivant trois positions :
- une position de fermeture, indiquée sur la figure 2 en F, où elle est sensiblement parallèle aux deux traverses 4a, 4b, la bête ne pouvant pas passer sa tête entre la barre mobile 10 et la traverse 4b ;
- une position d'ouverture, indiquée sur la figure 2 en O, où elle est inclinée par rapport aux traverses 4a, 4b, avec la chape de blocage 11 rapprochée de la barre coudée 5, la bête pouvant passer sa tête en partie supérieure du cornadis 1 entre la barre mobile 10 et la traverse 4b ; dans cette position, la barre mobile 10 tend à être sensiblement parallèle au segment 7a de la barre coudée 5 ;
- une position de dégagement, indiquée sur la figure 2 en D, où elle est inclinée avec la chape de blocage 11 vers la traverse 4b, cette position permettant de dégager la tête de la bête lorsqu'elle est coinçée en partie inférieure du cornadis entre la barre mobile 10 et la traverse 4b. Dans cette position, la barre mobile 10 tend à être sensiblement parallèle au segment 7b de la barre coudée 5.

La barre de commande 13 peut être disposée suivant diverses positions angulaires.

Plus précisément, elle peut se trouver dans deux positions angulaires extrêmes déterminées par la position des organes de fin de course 26, et se trouver dans une position angulaire intermédiaire.

Pour chacune de ces trois positions angulaires de la barre de commande 13, la barre mobile 10 peut être manoeuvrée et/ou bloquée dans des positions différentes.

Lorsque la position angulaire de la barre de commande 13 est telle que le tourillon transversal 15 est bloqué entre les bords de blocage 18a, 18b des saillies 16a, 16b (figure 3A), l'un des ergots 26a, 26b est en butée contre la paroi correspondante 21c de la pièce de support 21. La barre de commande 13 est ainsi dans sa première position angulaire extrême. On peut alors déplacer l'organe en L 27 de manière que la petite barre 27b repose sur le longeron 3a, pour verrouiller la position angulaire de la barre de commande 13.

La barre mobile 10 est alors sensiblement parallèle aux traverses 4a, 4b et donc bloquée en position de fermeture.

On peut d'ailleurs verrouiller la barre mobile 10 dans cette position en prévoyant sur le longeron 3a des moyens de verrouillage 28.

Comme représenté sur les figures 2 et 6, ces moyens de verrouillage 28 se présentent sous la forme de deux tubes ou anneaux, d'axe perpendiculaire au plan P, fixés rigidement au longeron 3a et disposés de part et d'autre de la chape de blocage 11 lorsque la barre mobile 10 est sensiblement parallèle aux traverses 4a, 4b.

Ces tubes ou anneaux 28 sont destinés à recevoir une pièce formant agrafe (non représentée) venant à cheval sur la chape de blocage 11 et la verrouillant ainsi dans sa position de fermeture.

Dans un autre mode de réalisation, on peut prévoir que les moyens de verrouillage 28 ne comportent qu'un tube ou anneau du type précité.

Si, A partir de cette position, on tourne la barre de commande 13 d'un quart de tour, le tourillon transversal 15 n'est sollicité par aucune saillie (figure 3C) et les organes de fin de course 26 et les moyens de verrouillage 27 ne sont pas en contact avec la pièce de support 21 ou le longeron 3a. La barre de commande 13 est alors dans sa position angulaire intermédiaire.

La barre mobile 10 peut ainsi prendre n'importe quelle position de fermeture F, d'ouverture O ou de dégagement D, puisque le tourillon transversal 15 est libre de se déplacer le long de la barre de commande 13.

La rotation de la barre de commande 13 d'un autre quart de tour, à partir de cette dernière position intermédiaire, dans le même sens que précédemment, amène la saillie 19 du côté opposé à la barre mobile 10, les saillies 16a et 16b étant dirigées vers celle-ci.

Cette rotation entraîne également la butée de l'autre ergot 26b, 26a contre la paroi correspondante 21c (figure 3B).

La barre de commande 13 est ainsi dans sa deuxième position angulaire extrême.

On peut alors déplacer l'organe en L 27 contre le longeron 3a pour verrouiller la barre de commande 13 dans cette position angulaire.

La barre mobile 10 peut ainsi passer librement de la position de fermeture F à la position d'ouverture O, le tourillon transversal 15 pouvant être librement déplacé le long de la barre de commande 13 depuis une situation la plus proche du tronçon 6a de la barre coudée 5 -sa course étant limitée par l'extrémité 14a des rainures 14, qui est opposée à la barre mobile 10- jusqu'au bord de blocage 19b de la saillie 19.

On comprendra que les rainures 14 doivent présenter une longueur -comptée suivant la direction longitudinale de la barre mobile 10- suffisante pour que le tourillon transversal 15 puisse y être guidé jusqu'à venir en butée contre son extrémité 14a, dirigée vers l'extérieur de la chape de blocage 11, lorsque la barre mobile 10 est en position d'ouverture et de dégagement.

Cette longueur doit donc être suffisante pour qu'en position d'ouverture O, respectivement de dégagement D, la barre mobile 10 tende à être sensiblement parallèle au segment 7a, respectivement 7b, de la barre coudée 5.

La longueur des rainures 14, et donc celle des parois 11a, 11b de la chape de blocage 11, doivent être également suffisantes pour que le tourillon transversal 15 puisse surmonter les saillies 16a, 16b et 19.

De ce qui précède, on comprendra que les trois positions angulaires distinctes de la barre de commande 13 permettant la manoeuvre et/ou le blocage de la barre mobile 10 dans des positions différentes sont possibles notamment grâce à au moins deux saillies, non nécessairement alignées mais écartées d'un espace déterminé, et sollicitant le tourillon transversal 15 qui est guidé en translation et adapté à se déplacer le long de la barre de commande 13.

Les deux saillies peuvent présenter des formes et des dispositions sur la barre de commande 13, différentes de celles des saillies 16a, 16b et 19.

L'une des saillies doit permettre la situation de la deuxième position angulaire extrême décrite précédemment, tandis que la combinaison des deux saillies au moins, de par leur forme et disposition, doit permettre la situation de la première position angulaire.

En outre, la forme et la disposition des saillies doivent être définies de manière à permettre la situation de la position angulaire intermédiaire.

Le blocage de la barre de commande 13 dans chacune de ses positions angulaires est en outre permis grâce à des organes de fin de course, du type des ergots 26a, 26b.

D'autre part, le cornadis de l'invention peut être fixé à des poteaux verticaux ancrés dans une surface de référence, par exemple le sol.

Le longeron 3b peut alors soit reposer sur le sol, soit être écarté du sol.

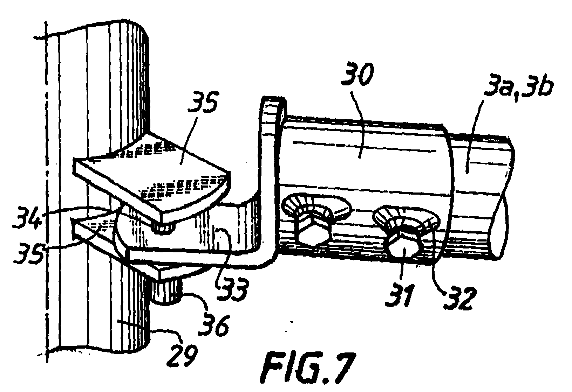

La figure 7 représente un mode de réalisation de fixation d'un longeron 3a, 3b à un poteau vertical 29.

Suivant ce mode de réalisation, au moins une extrémité d'un longeron 3a, 3b comporte un embout de fixation 30, se présentant par exemple sous la forme d'un tube cylindrique creux emmanché sur l'extrémité du longeron 3a, 3b.

De même que pour le manchon 22, l'embout de fixation 30 est fixé rigidement sur l'extrémité du longeron 3a, 3b au moyen de vis 31 traversant un orifice 32 de l'embout de fixation 30 et venant s'ancrer dans le longeron 3a, 3b.

Du côté de l'extrémité libre de l'embout de fixation 30, est fixée rigidement une patte 33, s'étendant sensiblement suivant la direction du longeron 3a, 3b. La patte 33 est munie d'un orifice 34 dont l'axe s'étend sensiblement perpendiculairement à la patte 33 et parallèlement aux traverses 4a, 4b.

La patte 33 est destinée à être placée en sandwich entre deux plaques 35 sensiblement parallèles et en regard, s'étendant perpendiculairement et appartenant au poteau 29.

Les plaques 35 sont également traversées par un orifice d'axe sensiblement parallèle à la direction du poteau 35.

Lorsque le cornadis 1 est monté, les orifices des plaques 35 et l'orifice 34 de la patte 33 sont disposés en regard les uns des autres et reçoivent un tourillon 36.

Ainsi, le longeron 3a, 3b -et donc le cornadis 1-peut être articulé autour de l'axe formé par la vis 36.

## Revendications

1. Cornadis du type comportant au moins un élément de structure tubulaire (2) s'étendant dans un plan (P) principal et comprenant :
- deux longerons (3a, 3b) sensiblement parallèles ;
- au moins deux traverses (4a, 4b) sensiblement perpendiculaires aux longerons (3a, 3b) et les reliant entre eux de manière rigide ;
- une barre coudée (5), fixée rigidement aux deux (3a, 3b) longerons, entre les deux traverses (4a, 4b) ;
- une barre de commande (13), mobile en rotation, s'étendant sensiblement parallèlement de manière écartée mais à proximité d'un des longerons (3a) et comportant une saillie (19) formée d'une rampe (19a) et d'un bord de blocage (19b), terminant la rampe (19a), sensiblement perpendiculaire à la barre de commande (13) ;
- une barre mobile (10) sensiblement rectiligne, montée pivotante sur la barre coudée (5), avec son axe de pivotement sensiblement perpendiculaire au plan principal (P) ; et
- fixée rigidement à une extrémité (10a) de la barre mobile (10), une chape de blocage (11) disposée à cheval sur ledit longeron (3a) et la barre de commande (13), et recevant un tourillon transversal (15) ;
la barre coudée (5) présentant une forme sensiblement triangulaire, dont le sommet (7c) correspond à l'axe de pivotement de la barre mobile (10), de sorte que la barre mobile (10) peut être disposée suivant trois positions : une position dite de fermeture (F), où elle est sensiblement parallèle aux deux traverses (4a, 4b) ; une position dite d'ouverture (0) et une position dite de dégagement (D), où elle est inclinée par rapport aux traverses (4a, 4b) en étant rapprochée de l'un ou l'autre des segments (7a, 7b) de la barre coudée (5) formant le triangle ; en position dite d'ouverture (0), la chape de blocage (11) étant rapprochée de la barre coudée (5),
caractérisé en ce que en combinaison,
la barre de commande (13) comporte des moyens (16a, 16b, 19, 26, 27), dont la saillie (19) et au moins une deuxième saillie (16a, 16b), pour permettre à ladite barre de commande (13) de se trouver dans trois positions angulaires distinctes, de sorte que pour chacune de ces positions angulaires, la barre mobile (10) puisse respectivement :
- être bloquée en position de fermeture (F) ;
- passer librement dans chacune des trois positions (F, O, D) ; ou
- passer librement de la position de fermeture (F) à la position d'ouverture (O) ;
et le tourillon transversal (15) est guidé en translation suivant une direction (D3) sensiblement perpendiculaire à la barre de commande (13) et destiné à reposer sur la barre de commande et à être sollicité, du fait de son propre poids, notamment par la rampe (19a) de la saillie (19), respectivement ladite deuxième saillie (16a, 16b), lorsque le cornadis (1) est en position de fonctionnement, la barre de commande (13) ayant une position angulaire respective permettant cette sollicitation ; la deuxième saillie étant écartée de la saillie (19) par un espace adapté à recevoir, avec un léger jeu, le tourillon transversal.

2. Cornadis selon la revendication 1, caractérisé en ce que la barre mobile (10) comporte des moyens de condamnation (12) de passage entre la barre mobile (10) et la barre coudée (5), ces moyens de condamnation (12) s'étendant dans un plan décalé par rapport au plan principal (P).

3. Cornadis selon la revendication 2, caractérisé en ce que les moyens de condamnation de passage (12) sont situés vers l'extrémité (10b) de la barre mobile (10), opposée à la chape de blocage (11), et/ou vers l'extrémité (10a) de la barre mobile (10), à laquelle est fixée la chape de blocage (11).

4. Cornadis selon la revendication 2 ou 3, caractérisé en ce que les moyens de condamnation de passage (12) se présentent sous la forme d'au moins un tube courbé, dont les deux extrémités (12a, 12b) sont fixées rigidement à la barre mobile (10).

5. Cornadis selon l'une des revendications 1 à 4, caractérisé en ce que la barre coudée (5) comporte, d'un seul tenant, :
- deux tronçons tubulaires (6a, 6b), sensiblement alignés et parallèles aux traverses (4a, 4b),
- une portion tubulaire coudée (7), reliant les tronçons (6a, 6b) entre eux et comportant deux segments (7a, 7b) rectilignes inclinés l'un par rapport à l'autre et dont le point de convergence forme un coude (7c), ce dernier (7c) étant dirigé vers la barre mobile (10) et comportant des moyens de pivotement (8) de la barre mobile (10),
les extrémités libres des tronçons (6a, 6b) étant fixées rigidement au longeron correspondant (3a, 3b).

6. Cornadis selon la revendication 5, caractérisé en ce que le coude (7c) de la barre coudée (5) est situé sensiblement dans la partie médiane de la barre coudée (5).

7. Cornadis selon la revendication 5, caractérisé en ce que le coude (7c) est situé vers la partie médiane de la barre coudée (5), dans la partie opposée à la barre de commande (13).

8. Cornadis selon l'une quelconque des revendications 1 à 7, caractérisé en ce qu'il comporte en outre une tige (5a) s'étendant sensiblement parallèlement à la traverse (4a), entre la traverse (4a) et la barre coudée (5), et fixée au moins à l'une de ses extrémités, à la barre coudée (5), de manière à interdire le passage de la tête d'un animal entre la traverse (4a) et la barre coudée (5).

9. Cornadis selon l'une des revendications 5 à 8, caractérisé en ce que les moyens de pivotement comprennent une chape (8) rigidement fixée à la barre coudée (5), à l'endroit du coude (7c), et disposée dans le plan principal (P), la chape (8) recevant' la barre mobile (10) et un tourillon (9) la traversant et formant son axe de pivotement.

10. Cornadis selon l'une des revendications 1 à 9, caractérisé en ce que la chape de blocage (11) s'étend sensiblement dans la même direction et le même plan que la barre mobile (10).

11. Cornadis selon la revendication 10, caractérisé en ce que la chape de blocage (11) comporte deux rainures rectilignes (14) en regard s'étendant dans la même direction que la barre mobile (10), et dans lesquelles le tourillon transversal (15) est guidé.

12. Cornadis selon l'une des revendications 1 à 11, caractérisé en ce que la barre de commande (13) est tubulaire et sensiblement rectiligne.

13. Cornadis selon l'une des revendications 1 à 12, caractérisé en ce que la barre de commande (13) comporte des moyens de verrouillage (28) de la barre mobile (10) en position de fermeture.

14. Cornadis selon la revendication 13, caractérisé en ce que les moyens de verrouillage (28) comportent :
- deux tubes ou anneaux, d'axe géométrique sensiblement perpendiculaire au plan principal (P), fixés sur le longeron (3a) et destinés à être disposés de part et d'autre de la chape de blocage (11) lorsque la barre mobile (10) est sensiblement parallèle aux traverses (4a, 4b) ; et
- une pièce formant agrafe destinée à venir à cheval sur la chape de blocage (11) et à être engagée dans les deux tubes ou anneaux.

15. Cornadis selon l'une des revendications 1 à 14, caractérisé en ce que la barre de commande (13) comporte une paire de saillies alignées (16a, 16b), de forme sensiblement identique à celle de la saillie (19), avec leur bord de blocage (18a, 18b) en regard et écartés l'un de l'autre par un espace adapté à recevoir le tourillon transversal (15) pour le bloquer.

16. Cornadis selon la revendication 15, caractérisé en ce que la paire de saillies (16a, 16b) est diamétralement opposée à la saillie (19) et le bord de blocage (18b) d'une des saillies (16b) de la paire de saillies est aligné avec le bord de blocage (19b) de la saillie (19).

17. Cornadis selon l'une des revendications 1 à 16, caractérisé en ce qu'il comporte en outre :
- des moyens de support (20) de la barre de commande (13) aptes à permettre son blocage en translation longitudinale tout en autorisant sa rotation ;
- des moyens de maintien (24) de la barre de commande (13) en position écartée du longeron adjacent (3a) ;
- des moyens (25) de commande en rotation de la barre de commande (13) ;
- des organes (26) de fin de course en rotation de la barre de commande (13) ; et
- des moyens (27) de verrouillage en position de la barre de commande (13).

18. Cornadis selon la revendication 17, caractérisé en ce que les moyens de support (20) comprennent au moins une pièce de support (21), fixée rigidement au longeron (3a), comportant :
- une partie annulaire (21a) dont l'axe géométrique est sensiblement parallèle au longeron (3a) et présentant une ouverture (21b) dirigée vers le longeron (3a), la partie annulaire (21a) étant destinée à recevoir avec jeu la barre de commande (13) ;
- deux parois (21c) prolongeant chacune des extrémités de la partie annulaire (21a) adjacentes à l'ouverture (21b), ces parois (21c) étant fixées rigidement par leur extrémité libre au longeron (3a), dans le plan principal (P).

19. Cornadis selon la revendication 18, caractérisé en ce que les parois (21c) sont inclinées par rapport à l'axe géométrique de la partie annulaire (21a) et divergent du côté opposé à l'ouverture (21b).

20. Cornadis selon la revendication 18 ou 19, caractérisé en ce que les moyens de support (20) sont disposés au moins vers les extrémités de la barre de commande (13).

21. Cornadis selon l'une des revendications 17 à 20, caractérisé en ce que les moyens de maintien (24) comprennent une pièce sensiblement plane comportant, vers son centre, un orifice circulaire (24a) dont l'axe géométrique est sensiblement parallèle au longeron (3a), l'une des extrémités (24b) de la pièce présentant une courbe à concavité tournée vers l'extérieur, de forme sensiblement complémentaire à celle du longeron (3a), ladite pièce étant destinée à reposer, par son extrémité courbée, sur le longeron (3a) et à recevoir, par son orifice (24a), la barre de commande (13).

22. Cornadis selon la revendication 21, caractérisé en ce que les moyens de maintien (24) comportent en outre deux encoches (24c) sensiblement rectilignes, alignées, débouchant sur l'orifice (24a) et s'étendant sensiblement perpendiculairement à l'axe géométrique de l'orifice (24a), et parallèlement aux traverses (4a, 4b), lorsque les moyens de maintien (24) sont en position sur le longeron (3a), les encoches (24c) présentant une dimension telle qu'elles puissent recevoir avec jeu les saillies (16a, 16b, 19).

23. Cornadis selon l'une des revendications 17 à 22, caractérisée en ce qu'il comporte en outre au moins deux manchons (22) de diamètre intérieur sensiblement complémentaire au diamètre de la barre de commande (13), les manchons (22) étant destinés à être maintenus fixes sur la barre de commande (13) par le serrage d'organes de fixation (23) - notamment vis et écrou - traversant un trou du manchon (22) et venant s'ancrer dans la barre de commande (13), les manchons (22) étant disposés aux extrémités de la barre de commande (13), à l'extérieur et proches des moyens de support (20), de manière à permettre le blocage en translation longitudinale de la barre de commande (13).

24. Cornadis selon l'une des revendications 17 à 23, caractérisé en ce que les moyens de commande comprennent au moins une poignée (25) fixée rigidement vers une extrémité de la barre de commande (13), permettant par sa manoeuvre la rotation de la barre de commande (13).

25. Cornadis selon l'une des revendications 17 à 24, caractérisé en ce que les organes de fin de course (26) comprennent deux ergots (26a, 26b) fixés rigidement à la barre de commande (13), à proximité d'au moins une pièce de support (21), et s'étendant sensiblement parallèlement à la barre de commande (13).

26. Cornadis selon la revendication 25, caractérisé en ce que les ergots (26a, 26b) sont espacés d'une distance sensiblement égale au diamètre de la barre de commande (13) et leurs dimensions sont déterminées de sorte que, lors de la rotation de la barre de commande (13), un ergot (26a, 26b) vienne buter contre l'une des parois (21c) de la pièce de support (21), de manière à limiter la course en rotation de la barre de commande (13) à un demi-tour.

27. Cornadis selon la revendication 25 ou 26, caractérisé en ce que les moyens de verrouillage en position de la barre de commande (27) comprennent un organe présentant sensiblement la forme d'un L, dont l'extrémité de la hampe (27a) est fixée de manière mobile en rotation à la barre de commande (13) entre les deux ergots (26a, 26b), la hampe du L (24a) présentant une longueur au moins égale à la distance séparant la barre de commande (13) du longeron (3a) et la petite barre (27b) du L présentant une forme courbe à concavité tournée vers l'extérieur, de manière à pouvoir épouser sensiblement la forme du longeron (3a) lorsqu'un des ergots (26a, 26b) est en butée.

28. Cornadis selon l'une des revendications 25 à 27, caractérisé en ce que les organes de fin de course (26) et les moyens de verrouillage en position (27) sont montés de manière fixe sur au moins un des manchons (22).

29. Cornadis selon l'une des revendications 24 à 28, caractérisé en ce que la poignée (25) est fixée rigidement sur un des manchons (22).

30. Cornadis selon l'une des revendications 1 à 29, caractérisé en ce que les longerons (3a, 3b) comportent à au moins une de leurs extrémités respectivement un embout de fixation à un poteau ancré dans une surface, par exemple dans le sol, de manière que le cornadis soit écarté de ladite surface.
